# EUROPEAN PATENT APPLICATION

(11) **EP 4 095 093 A1**
(43) Date of publication of application: **30.11.2022**
(21) Application number: 21176479.0
(22) Date of filing: 28.05.2021
(51) Int. Cl.: C01B 21/26, C01B 21/28, C01B 21/38, B01D 53/86, B01J 29/072

(54) **PROCESS FOR PRODUCTION OF NITRIC ACID PROVIDED WITH A SECONDARY ABATEMENT TREATMENT**

(71) Applicant: CASALE SA, 6900 Lugano (CH)
(72) Inventor: OSTUNI, Raffaele, 6900 Lugano (CH); BIASI, Pierdomenico, 22100 Como (IT); GARBUJO, Alberto, 22100 Como (IT); PANZERI, Nicola, 6932 Breganzona (CH); OLDANI, Fabio, 21050 Cantello (VA) (IT); BIALKOWSKI, Michal Tadeusz, 5417 Untersiggenthal (CH)
(74) Representative: M. Zardi & Co S.A.

(57) **Abstract**

A process for the synthesis of nitric acid (100) comprising the steps of treating ammonia (1) in presence of oxygen (2) or air to a catalytic oxidation step (3) to yield a combusted gas (4), subjecting the combusted gas (4) to a catalytic decomposition step (5) to yield a N2O depleted gas stream (6), subjecting the N2O depleted gas stream (6) to a cooling step (9) to yield a cooled stream (11) and subjecting said cooled stream (11) to an absorption step (23) in presence of water (50) to yield a nitric acid (12) and a tail gas (13) retaining NOx; the catalytic decomposition step (5) is carried out at a temperature comprises between 450 °C and 700 °C on one or more iron zeolites catalyst deposited, coated, or coextruded onto a catalyst support provided with gas permeable channels.

## Description

### Field of application

The invention relates to the field of production of nitric acid. In more details, the invention discloses a nitric acid synthesis process comprising an improved N2O secondary abatement treatment. The invention also relates to a nitric acid synthesis plant according to the process.

### Prior art

The production of nitric acid, on industrial scale, involves the catalytic oxidation of ammonia over platinum-rhodium (Pt-Rh) catalyst to yield a combusted gas retaining primary nitrogen monoxide NO which is then oxidised along the process to nitrogen dioxide NO2. Nitric acid is subsequentially synthesized by contacting NO2 with water in an absorption tower. An overview of the procedure for the nitric acid production and its various process variants can be found in Ullman's Encyclopedia of Industrial Chemistry, Vol. A 17.

The catalytic oxidation of ammonia is not 100% selective towards the formation of NO but a certain proportion of N2O and N2 is always present in the combusted gas. Unfortunately, the N2O formed is not absorbed in water when the process gas is fed to the absorption tower and consequently, it goes into a tail gas that is co-produced together with the nitric acid in the absorption tower. The tail gas also retains uncovered NOx (e.g. NO and NO2).

NOx and N2O are known pollutants and the related emissions are subject to strict environmental regulations. Typically, the concertation of N2O and NOx retained in the tail gas must be significantly lower than 100 ppm before being able to be discharged into the atmosphere.

Removing the above compounds to such a low concentration is economically challenging. Therefore, there is a strong incentive in the development of a cost-effective process for removing NOx and N2O from the tail gas of a nitric acid production process.

The symbol NOx collectively denotes the so-called nitrogen oxides, namely nitrogen monoxide NO, nitrogen dioxide NO2 and possibly dinitrogen tetroxide N2O4. A stage or a process step for decomposition of N2O content in a gas is named deN2O and a stage or a process step for reduction of NOx content is named deNOx.

In the field of nitric acid production process, the abatement of N2O and/or NOx is termed from primary to quaternary according to the stage of the nitric acid process. Abatement of N2O and NOx from the tail gas of the absorption stage and upstream of the tail gas expander is termed tertiary abatement.

N2O does not play a role in the formation of nitric acid and, therefore, it can also be removed in the previous process steps. Removal of N2O from the combusted gas after the oxidation of ammonia and before the absorption stage is referred to as secondary abatement, whilst measures aimed to avoid N2O formation during the oxidation of ammonia are called primary abatement. Abatement of N2O and/or NOx performed after the expansion (i.e. downstream of the expander) is known as a quaternary abatement.

Various possible ways of avoiding N2O and NOx emission in nitric acid plants are known to the skilled person in the art. A combination of secondary and tertiary abatement treatments for the removal of N2O and NOx is considered a competitive technology aiming at doing so.

Typically, the secondary treatments are designed to achieve a degree of N2O removal comprised between 90% and 95%, whilst the tertiary treatments are deemed necessary to convert NOx and to possibly further push the removal of N2O so to comply with the environmental regulations.

Unfortunately, such combination of abatement treatments is expensive because a great volume of catalyst is required to perform the removal of N2O in the secondary abatement treatment and to remove N2O and NOx in the tertiary treatment. Additionally, catalytic vessels having sustained dimension are necessary to retain such a high volume of catalyst.

Therefore, it is highly desirable to provide a nitric acid synthesis process and a plant wherein the removal of N2O and NOx can be carried out in a more cost-effective way.

### Summary of the invention

The invention aims to overcome the above drawbacks of the prior art.

A first aspect of the present invention is a process for the preparation of nitric acid according to claim 1.

The process for the preparation of nitric acid comprises the steps of subjecting ammonia in presence of oxygen or air to a catalytic oxidation step to yield a combusted gas, subjecting the combusted gas to a catalytic decomposition step to yield a N2O depleted gas stream, subjecting the N2O depleted gas stream to a cooling step to yield a cooled stream, subjecting said cooled stream to an absorption step in presence of water to yield a nitric acid and a tail gas retaining NOx.

The process is characterised by the fact that the catalytic decomposition step is carried out at a temperature comprises between 450 °C and 700 °C and the catalytic decomposition step is performed on a catalytic assembly comprising a support for the catalyst, the support being provided with gas permeable channels, wherein a catalyst containing one or more iron zeolite(s) is deposited, coated, or coextruded on said support.

The term iron zeolite denotes a zeolite which has been loaded with iron with a suitable known process such as ion exchange. Processes for iron-loading of zeolites are known to a skilled person. According to the invention one or more iron zeolite(s) are provided on said support via deposition, coating or coextrusion. Different iron zeolites may be mixed and provided on the support, or provided on the support in different steps.

A further aspect of the present invention is a plant for the synthesis of nitric acid adapted to perform the process of claim 1.

The plant for the synthesis of nitric acid comprises an ammonia burner for the catalytic oxidation of NH3 by means of oxygen to yield a combusted gas, a catalytic reactive bed for the N2O decomposition arranged downstream the ammonia burner configured to yield a N2O depleted gas stream, wherein the N2O catalytic decomposition step is performed on a catalytic assembly comprising a support provided with gas permeable channels wherein a catalyst containing one or more iron zeolites is deposited, coated, or coextruded on said support.

The plant further comprises a cooling section arranged downstream of said catalytic reactive bed, an absorption tower arranged downstream the cooling section for reacting NOx with an absorption medium to yield nitric acid and a tail gas, a gas flow line connecting the ammonia burner to said catalytic reactive bed and a gas flow line connecting said catalytic reactive bed to the cooling section.

A further aspect of the present invention is a catalytic assembly according to the claims.

The catalytic assembly comprises a catalyst suitable for the decomposition of N2O and a suitable support for the catalyst. Said support is a monolith unit or a periodic ordered cellular structure or an open cell metallic foam.

Said support comprises a plurality of gas permeable channels wherein the catalyst is deposited on the surface of said gas-permeable channels optionally in presence of a binder.

Advantageously, the N2O catalytic decomposition step can be operated at a higher temperature than the conventional N2O catalytic decomposition process therefore resulting in a faster decomposition kinetics and a reduction in the volume of the catalyst required.

Even more advantageously, extraordinary N2O abatement efficiency (higher than 98%) can be achieved. Additionally, a reactor located in a tertiary position of the plant is hardly required to further push the conversion of N2O.

The support of the catalyst is a monolith unit or a periodic ordered cellular structure or an open cell metallic foam provided with gas permeable channels wherein the catalyst is immobilized on the walls delimiting the channels. The catalyst is therefore characterised by high resistance to deactivation at the operating conditions and is subjected to low pressure drops resulting in energy saving.

The process may further comprise a catalytic reduction step of NOx (deNOx) carried out downstream of the absorption tower. Such catalytic reduction step introduces additional advantages to the process. In particular, the deNOx step is not required to eliminate the N2O retained in the tail gas therefore the NOx reduction can be carried out a lower temperature than the conventional tertiary abatement process.

Additionally, a reduction in the NOx emission during the start-up of the plant can be envisaged in virtue of the lower temperature required to sustain the catalytic reduction and in virtue of the higher heat transfer coefficient of the catalytic assembly.

The invention is also applicable to a revamping procedure, e.g. revamping of a nitric acid plant. Revamping a nitric acid plant may be required to meet a target concertation of NOx and N2O in the tail gas discharged to the atmosphere.

### Description of the invention

The N2O abatement efficiency of the catalytic decomposition step is preferably greater than 98%, more preferably greater than 99%, and even more preferably the N2O content in the depleted gas stream is lower than 15 ppm.

The support of the catalyst is preferably a monolith block or a periodic ordered cellular structure or an open cell metallic foam.

According to a preferred embodiment, the nitric acid synthesis process further comprises the steps of subjecting the tail gas to a heating step followed by a catalytic reduction step to remove NOx in presence of a reducing agent to yield a purified gas stream.

Preferably, said catalytic reduction step to remove NOx (also termed deNOx step) is performed on a catalytic assembly comprising a monolith support provided with gas permeable channels wherein a catalyst comprising one or more zeolites is deposited or coextruded on said support. Preferably, the catalytic reduction step to remove NOx also removes N2O and the N2O abatement efficiency of said catalytic reduction step is not greater than 2%.

The zeolites used in the above step to remove NOx may include iron-loaded zeolites and/or non-iron zeolites. The term non-iron zeolite denotes a zeolite which has not been loaded with iron. Also a non-iron zeolite may contain some iron, although not as a result of a loading process.

In some alternative embodiments the catalytic reduction step to remove NOx may be performed on a pellet catalyst.

Preferably, the monolith support used in the deNOx step is provided with gas permeable sub-channels configured to inject a reducing agent e.g. ammonia into the channels. Preferably, the subchannels have a reduced cross-sectional area compared to the channels.

Preferably, the temperature of the tail gas after the heating step is comprised between 300 °C and 650 °C.

According to a particularly preferred embodiment of the present invention, the catalyst exploited for the NOx catalytic reduction step is a ferrierite catalyst, preferably a non-iron ferrierite catalyst.

Preferably, the N2O depleted gas is used to pre-heat the tail gas before being fed to said cooling step.

The N2O catalytic decomposition step and the NOx catalytic reduction step are sustained by chemical reactions that are exothermic in nature. Such reactions operate at different thermal levels specifically the N2O decomposition operates at higher temperature than the NOx reduction consequentially, according to an alternative embodiment of the present invention, the N2O catalytic decomposition step and the NOx catalytic conversion step can be carried out simultaneously so to achieve thermal integration between the two steps.

Accordingly, the N2O decomposition and the NOx reduction are carried out in a single apparatus wherein the heat developed by the N2O catalytic decomposition step is transferred to the NOx catalytic reduction step. Advantageously, just a single unit is required to carry out both the NOx reduction and the N2O decomposition consequentially a reduction in the fixed costs of the plant is expected.

Preferably the purified gas stream exiting the deNOx step is subjected to an expansion stage to recover mechanical energy. After expansion, the purified gas stream may be subjected to a further heat recovery step before being vented to the atmosphere.

According to a particularly preferred embodiment of the present invention, the reducing agent exploited for the deNOx step is ammonia. The reducing agent can be mixed with the tail gas in a mixing unit and then subjected to the NOx removal step. Alternatively, the reducing agent can be injected directly inside channels of the monolith support via the subchannels so that no mixing device is required.

Preferably, the process for the preparation of nitric acid is a dual pressure nitric acid synthesis process.

According to the invention, the plant for the synthesis of nitric acid may comprise a catalytic reactive bed for the catalytic reduction of NOx arranged downstream of the absorption tower and a line for feeding a reducing agent to said catalytic reactive bed for the reduction of NOx.

The plant may further comprise a heat exchanger section interposed between the catalytic reactive bed for the N2O decomposition and the cooling section, wherein the heat exchanger section is configured to indirectly transfer heat from the N2O depleted gas stream to the tail gas.

According to an alternative preferred embodiment, the catalytic reactive bed for the N2O decomposition and catalytic reactive bed for the reduction of NOx are comprised in a single section.

According to the invention, the catalytic decomposition step of N2O is carried out on iron zeolites catalyst. The catalyst may be deposited on a supporting structure that acts as a catalyst support for example via a wash coating process or coextruded directly into the catalytic structure. Preferably, said structure is a monolith block provided with gas permeable channels. The channels are delimited by walls that are impregnated with the catalyst so that the catalytic decomposition of N2O occurs across the channel.

The iron ferrierite catalyst is designed to promote the oxidation of NO to NO2, due to the exothermic nature of the reactions taking place the temperature of the reacting gasses crossing the channels increases, advantageously the performance of iron ferrierite catalyst is magnified and an enhanced heat recovery can be carried out in the cooling train arranged downstream of the deN2O reactor. Additionally, due to the high conversion of NO to NO2, the subsequent absorption of NO2 in water is pushed towards the synthesis of nitric acid.

Advantageously, since the N2O catalytic decomposition is carried out at a higher temperature than the conventional N2O decomposition process and in virtue of the fact that the catalytic surface area exposed to the gas flow is higher than the catalytically active area available in a packed bed reactor, the space velocity value through the catalytic bed needed to reach the decomposition of N2O is higher.

The space velocity in the N2O catalytic decomposition step is preferably higher than 5000 h-1, preferably higher than 10000 h-1, more preferably comprised between 15000 h-1 and 40000 h-1, for example 25000 h-1.

According to a particularly preferred embodiment of the present invention, the catalytic reduction step of the NOx retained in the tail gas leaving the adsorption step is carried out on a zeolite deNOx catalyst. Preferably, the zeolite catalyst is a ferrierite catalyst, more preferably a non-iron-loaded ferrierite catalyst deposited on a support structure. Said support structure and the catalyst form a so-called catalytic assembly. Preferably the support structure is a monolith provided with gas permeable channels.

In a preferred embodiment, a target removal of the dinitrogen oxide may be obtained in the catalytic decomposition step carried out after the ammonia oxidation step and prior to the absorption.

As N2O is removed prior to absorption, the NOx catalytic reduction step is not required to eliminate N2O, therefore a non-iron loaded ferrierite catalyst can be used, even if less active toward the reduction of the N2O. The non-iron-loaded ferrierite is the preferred option for the de-NOx step in light of the reduced synthesis cost compared to the iron-loaded ferrierite catalyst. Additionally, the applicant has found that non-iron ferrierite catalyst and the iron ferrierite catalyst have comparable deNOx activity.

A further advantage is that the catalytic conversion can be carried out at a temperature that is optimal to the removal of NO and NO2, such temperature being lower than the temperature required to decompose the N2O. Therefore the energy consumption of the plant can be optimized. Additionally, during the start-up of the plant the operating temperature can be reached faster and consequently the NOx emissions are significantly reduced.

Preferably, the catalytic assembly is characterised by a void fraction not including the porosity of the support, which is higher than the intraparticle void fraction expected in conventional catalytic packed bed reactors. The higher void fraction translates into a higher cross-section area available for the passage of the reactive gas, to a higher catalytically active area in contact with the gas and finally to a lower pressure drop across the channel of the catalytic structure.

A further advantage is that mass transfer limitations from the gas phase to the catalytically active sites are diminished and a higher catalytic efficiency is expected. Even more advantageously compared to the convention catalytic packed bed reactors a lower volume of catalyst is required and a more compact reactor can be utilised.

Preferably, the zeolite catalyst is mixed with a binder preferably an inorganic binder and afterwards immobilised on the support. Advantageously, due to this immobilisation on the catalytic structure, the catalytic bed is not subject to shrink and/or settlement when contacted with the flowing gas therefore a predictable and a uniform gas flow distribution across the catalytic assembly is enabled.

Preferred inorganic binders include AI203, SiO2, ZrO2, CeO2 and a preferred concentration of binder is comprised between 10 wt% to 30 wt%.

A further advantage is that preferential flow paths of the gas flowing across the catalytic mass are avoided, and potential bypass of the reactive gas outside the reactive zone is prevented and a complete decomposition of N2O is achieved in only one catalytic stage.

Additionally, the above-mentioned catalytic assembly comprising a support integral with the catalyst and characterised by a high heat transfer coefficient. The high heat transfer coefficient allows during the start-up of the plant, to reach the operating temperature required to carry out the conversion or the decomposition faster. Therefore, the formation of unwanted by-products is prevented.

Preferably, the support is a ceramic monolith block provided with gas permeable channels. Preferably, the monolith block has a Cell Per Square Inch (CPSI) comprised between 100 and 400, a thickness of the rims lower than 1 mm and a void fraction comprised between 0.5 and 0.8.

The monolith block may be shaped according to the dimension of the reactor. For example, in tubular reactors, the monolith block may be cylindrically shaped. Alternatively, the monolith block may be manufacture as a cube or as a rectangular parallelepiped.

The monolith block may be installed inside a cartridge and subsequentially the cartridge may be arranged inside the reactor, or alternatively monolith blocks may be installed directly inside the reactor. A reactor may comprise only one cartridge or a plurality of cartridges. The cartridges may be arranged inside the catalytic reactor, one next to the others so to achieve a high-volume utilisation of the reactor. Alternatively, the cartridges may separate by a cavity, and a heat exchanger may be interposed between them.

The gas-permeable channels may have a cross-sectional area of various-shape. Preferably the cross-sectional area of the channels is a round or a square. A circular cross-sectional area is preferred because it allows a more homogeneous catalyst deposition, employing conventional deposition techniques, and a more uniform gas flow distribution across the channel so that the mass transfer limitations are reduced.

In a particularly preferred embodiment, the gas-permeable channels may assume the form of a convergent venturi tube, having the channel's cross-sectional area progressively decreasing along the length of channels. The convergent section is designed to establish an increased flow velocity of the gas stream along the channel so to increase the mass transport of the reactive species towards the catalytically active sites.

According to an embodiment of the present invention, the monolith block may comprise a plurality of subchannels. The subchannels may be configured to inject the reducing agent for example ammonia into a main gas stream for example the tail gas so to promote the mixing between two streams. The subchannels may be oriented at an angle with respect to the flow direction of the tail gas so to promote the mixing between the ammonia stream and the tail gas.

The subchannels may be arranged inside the monolith structure to inject ammonia or another reducing agent inside the tail gas stream having a co-current or counter-current flow direction with the latter. Advantageously, the NOx conversion efficiency is increased and the ammonia slip is minimised. Furthermore, no dedicated mixing unit, located outside the catalytic reactor is required and consequently, the dimension of the reactor can be reduced.

According to a particularly preferred embodiment, the monolith blocks comprising a plurality of channels and subchannels may be realised according to a 3D printing technique or other additive manufacturing methods.

According to a particularly preferred embodiment of the present invention, the monolith blocks may be manufactured with a ceramic or a metallic substrate. The metallic substrate enables to reduce the weight of the catalyst and improve the thermal conductivity of the assembly. Additionally, the metallic structure may be manufactured at a reduced cost compared to the ceramic monolith. The improved thermal conductivity enables a faster warm-up of the assembly hence a reduction in the N2O emissions during the start-up is envisaged.

According to an alternative embodiment of the present invention, the monolith blocks may be replaced with a Periodic Ordered Cellular Structures (POCS) as support for the catalyst. The POCS may provide high mixing efficiency, high turbulence and better mass transfer between the gas phase and the catalytic active sites so that the conversion efficiency is increased. The POCS may enable a better gas distribution over the whole catalyst mass meanwhile reducing the pressure drop across the assembly.

According to an alternative embodiment of the present invention, the catalytic assembly may be realised with an open-cell metallic foam. The metallic form may be made out of stainless steels or more preferably out of aluminum alloys. A related advantage is that the metallic foam expands when subjected to a temperature increase hence the gap between the catalytic assembly and the inner periphery of the catalytic vessel can be reduced, and the slip of reagent gas outside the reactive zone can be prevented.

According to the invention, the catalytic decomposition step of N2O is carried out in a catalytic bed arranged downstream the NH3 combustion step and upstream of the absorption. Preferably, the process includes also a deNOx conversion step arranged downstream of the absorption tower.

In another embodiment of the present invention, the deNOx reactor and the deN2O reactor are arranged into a single reactor, wherein the exothermic decomposition of N2O partially provides the heat required to promote the catalytic conversion of the NOx to nitrogen and water. Preferably the reactor is configured as a shell and tube heat exchanger wherein the decomposition of N2O is carried out inside the tube whilst the deNOx conversion is carried out in the shell side so that heat is indirectly transferred from the tube side to the shell side.

Accordingly, the deN2O catalysts are retained inside the tube whilst the deNOx catalysts are retained on the shell side. The deN2O catalysts may be mixed with a binder and deposited on walls that delimit the gas permeable channels of the monolith block forming the catalytic assembly.

The thermal integration between the N2O decomposition and the NOx conversion is particularly advantageous during the start-up of the plant, because the decomposition N2O occurs in the nitric acid synthesis process prior to the removal of the NOx consequently, heat is directly available to be transferred to the catalytic conversion of NOx.

According to an embodiment of the invention, the reducing agent (e.g ammonia) is uniformly mixed with the tail gas stream in a static mixer and subsequentially fed to the NOx catalytic conversion step.

According to another embodiment, the mixing between the fuel (ammonia) and the tail gas is carried out inside the reactor via a distributions system and/ or via injection in the subchannels of the monolith blocks.

According to an embodiment of the present invention, the reactor for the catalytic decomposition of N2O may be a tubular reactor wherein the catalyst is introduced inside the tubes coupled to a support structure (e.g. a monolith block). The tubular reactor may comprise a single tube or a plurality of tube.

The monolith blocks may be preloaded in a cartridge, the cartridge may then be placed inside the tubular reactor so to facilitate the loading and the replacement of the catalyst.

The catalytic blocks may be sealed inside the tubular reactor or inside the cartridge to minimise the gas bypass near the reactor's walls. The sealing at the periphery between the catalytic blocks and the cartridge is done preferably by adding iron ferrierite granulates or particles or sealing mat in the cavities located between the monolith blocks and the cartridge's wall. If necessary, catalytic granulates or particles may be added as well between each adjacent cartridge.

A heat exchanger may be located upstream of the deN2O tubular reactor to reduce the temperature of the combusted gas exiting the ammonia oxidation reactor before entering said rector. According, the deN2O reactor may be part of a cooling train.

The tubular reactor may have the same diameter or just a slightly enlarged diameter compared to the lines that carrying the combusted gas from the ammonia oxidation reactor towards the deN2O reactor. The tubular reactor may have a length greater than 0.5 m.

According to another embodiment, the deN2O reactor may be a catalytic converter provided with a vessel having a height that is greater than the diameter (slim configuration), the height of the reactor may be greater than 0.5 m, the aspect ratio between the height of the reactor and the diameter is far greater than the aspect ratio of conventional axial catalytic packed bed reactors.

Such "slim" configuration is not feasible with conventional packed bed reactors because the pressure drops across the catalytic bed retaining the granular catalyst would be unacceptable, and as well the gaseous flow distribution would be uneven.

The reactor for the deN2O may have one or more distribution plates to provide an even gas flow distribution of the combusted gas in the channels of the monolithic blocks.

The monolithic blocks may be arranged to cover a cross-sectional area of the reactors higher than 60%, preferably higher than 90%.

According to an embodiment of the present invention, the reactor for the catalytic conversion of NOx is a vertical vessel fitted with an internal cartridge that contains the monolith blocks and a suitable means to avoid the gas bypass outside the catalytic mass.

The deNOx reactor system may include a mixer and or a gas distributions system, the gas distribution system may be located inside or outside the reactor.

The reactor may comprise a plurality of cartridges separated by cavity wherein a heat exchanger is interposed between the cartridges. The flow direction of the tail gas may follow a radial direction or preferably an axial radial direction so to minimise the pressure drop across the catalytic assembly.

The heat exchanger accommodated between the cartridge may be exploited to provide the reaction heat necessary to support the tail gas heating and the conversion of NOx. The heat exchanger may be particularly advantageous during the start-up of the reactor.

In another embodiment of the present invention, the deNOx reactor can be a packed bed reactor provided with a least one catalytic bed.

According to a particularly preferred embodiment of the present invention, the deN2O reactor and the deNOx reactor may be coupled into a single combined reactor. The combined reactor may include a tube side and a shell side. The tube side may retain the deN2O catalyst, whilst the shell side may contain the deNOx catalyst. The tube side is not in fluid communication with the shell side but is arranged to indirectly transfer heat between the two sides so to achieved thermal integration between the N2O decomposition and the NOx conversion.

### Description of the figures

Fig. 1 shows a simplified block scheme of a process for the synthesis of nitric acid according to an embodiment of the invention.
Fig. 2 shows a simplified block scheme of a process for the synthesis of nitric acid according to another embodiment of the invention.
Fig. 3 shows a front view of a monolith support.
Fig. 4 shows a cross-sectional view of a monolith support according to an embodiment of the invention.
Fig. 5 shows a cross-sectional view of a monolith support according to an alternative embodiment of the invention.
Fig. 6 shows a simplified block scheme of a heat recovery section of the nitric acid synthesis process according to an embodiment of the invention.
Fig. 7 is a simplified block scheme of a heat recovery section of the nitric acid synthesis process according to an alternative embodiment of the invention.
Fig. 8 is a simplified block scheme of a heat recovery section of the nitric acid synthesis process according to an alternative embodiment of the invention.
Fig. 9 is a simplified block scheme of a heat recovery section of the nitric acid synthesis process according to an alternative embodiment of the invention.

### Detailed description of the figures

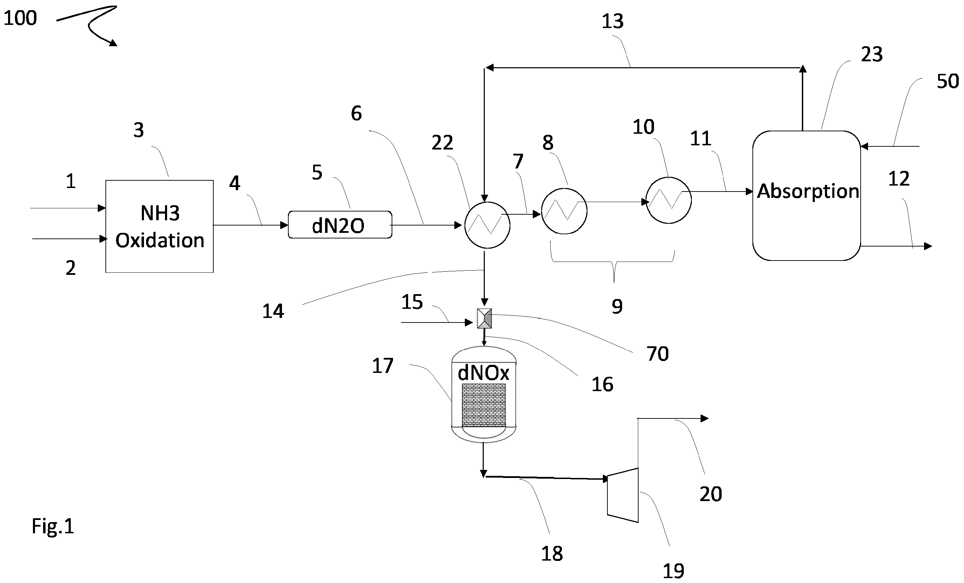

Fig.1 illustrates a process 100 for the synthesis of nitric acid comprising a secondary abatement treatment for the removal of N2O and a tertiary abatement treatment for the removal of NOx.

In figure it can be appreciated that the deN2O step is located in a secondary position according to the nomenclature used in the field of nitric acid production, since it is located after the ammonia oxidation step 3 but before the absorption step 23. Conversely, the deNOx step is located in a tertiary position arranged after the absorption step 23 but before the expansion step.

An ammonia stream 1 and an air (oxygen) stream 2 are fed to the ammonia oxidation step 3, wherein ammonia is catalytically oxidised to yield a combusted gas 4 retaining nitrogen monoxide (NO) over a platinum catalyst. Minor amounts of dinitrogen oxide N2O are formed as by-products of the oxidation reaction.

Subsequentially to the ammonia oxidation step, a portion of the nitrogen monoxide NO is further oxidised to nitrogen dioxide NO2 or dinitrogen tetroxide N2O4 by means of the oxygen retained in the air stream. A typical concertation of N2O in the combusted gas 4 is around 1000 ppm, and the ratio between NO2/NOx is about 0.1.

The combusted gas stream 4 exiting the ammonia oxidation step 3 is then fed to deN2O catalytic decomposition wherein the N2O retained in the combusted gas 4 is catalytically decomposed so to provide a N2O depleted gas stream 6.

The N2O catalytic decomposition step 5 is typically carried out at a temperature comprised between 450 and 700 °C in presence of iron zeolites catalyst deposited on a ceramic monolith so that the abatement efficiency of the catalytic decomposition step is greater than 98% or 99% and the concentration of N2O in the depleted gas stream is lower than 15 ppm. Typical space velocity in the deN2O catalytic bed is in the order of 16000 h-1.

The N2O depleted gas stream 6 is then fed to a heat exchanger section 22 wherein heat is indirectly transferred to the tail gas 13 exiting the absorption step 23 so to yield a partially cooled stream 7. The partially cooled stream 7 is then fed to a further cooling step 9 to yield a cooled stream 11 before being supplied to the absorption step 23.

The cooling step 9 can be carried out using a plurality of heat exchanger for example the heat exchanger 8 and 10 represented in figure 1.

In the cooling step 9 further conversion of nitrogen monoxide to nitrogen dioxide can occur. If deemed necessary, a compression step can be carried out prior to the absorption.

In the absorption step 23, nitric acid is synthesized by contacting NO2 retained in the cooled stream 11 with water 50. The absorption step 23 also provides a tail gas which comprises N2, O2, NOx and a residual amount N2O. Typically, the tail gas leaving the absorption steps contains 300 ppm of NOx and 20 to 25 ppm of N2O.

The tail gas 13 after pre-heating in the heat exchanger section 22 is heated to a temperature comprised between 300 °C and 650 °C and is subsequently mixed with an ammonia reducing agent 15 in the mixing step 70. The gas mixture 16 comprising ammonia and the tail gas are then fed to the catalytic NOx conversion step 17.

The NOx retained in the gas mixture 16 is then catalytically converter to N2, H2O and O2 leaving a purified gas stream 18 depleted in NOx. In this catalytic conversion stage 17, only a margin decomposition of the residual N2O occurs. Typically, the N2O abatement efficiency of this stage is not greater than 50%, preferably lower than 1%.

The catalytic reduction step is typically carried out on a zeolite catalyst preferably a non-iron ferrierite catalyst and typical operating conditions of the catalytic decomposition step are pressure of 11 bar, space velocity over the catalytic bed around 10 000 h-1 and the ratio between NH3/NOx in the gas mixture is slightly greater than 1.

The purified gas stream 18 is then sent to an expansion step 19 to generated the mechanical energy to drive the compressors of the nitric acid plant (e.g the air compressor, not showed). The exhaust gas 20 can then be subjected to a further heat recovery step (not showed) or vented directly to the atmosphere.

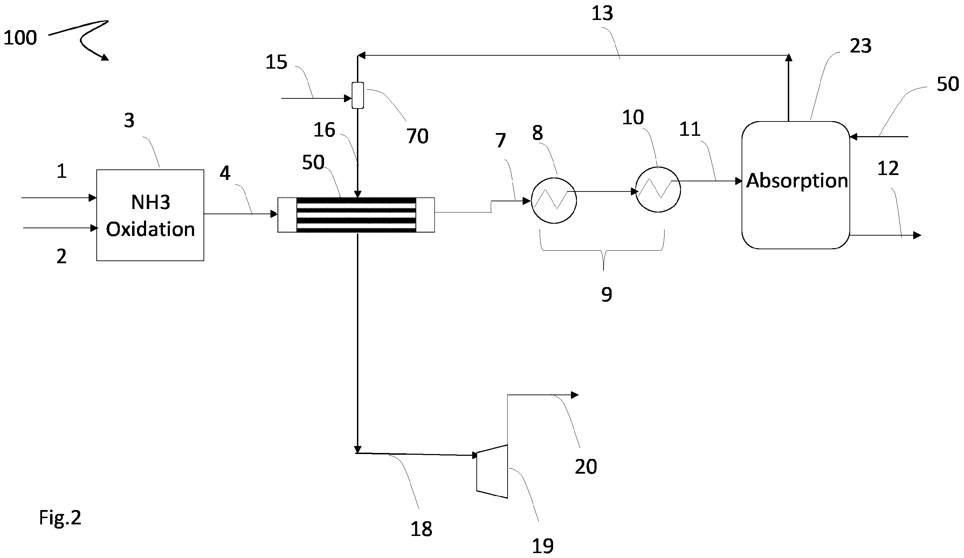

In Fig. 2 is represented a simplified block scheme of a process for the synthesis of nitric acid according to another embodiment of the invention.

In figure it can be appreciated that the deN2O step and the deNOx are carried out in a single heat exchanger unit 50, the combusted gas 4 exiting the ammonia oxidation step 3 is then fed to the tube side of the heat exchanger unit 50 whilst the tail gas 13 after being mixed with a reducing agent 15 (i.e. ammonia) is supplied to the shell side of the heat exchanger unit. Advantageously, heat is indirectly transferred from the tube side to the shell side.

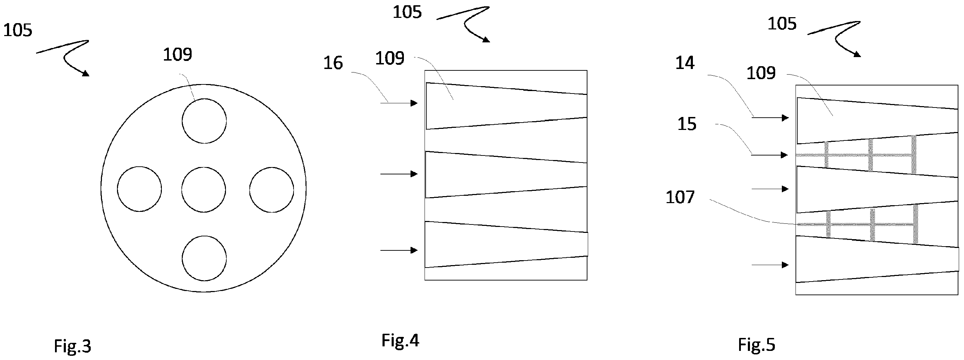

In Fig. 3 is represented a front view of the monolith support 105 comprising a plurality of gas-permeable channels 109 provided with a circular cross-section.

The circular cross-section is preferred over the rectangular one because it enables a more homogenous catalytic deposition.

In Fig. 4 is represented a cross-sectional view of the monolith support 105. In figure it can be appreciated that the gas permeable channels are provided with a cross-sectional area that is progressively decreasing from the inlet towards the outlet of the channel.

Such design is exploited to improve the mass transfer of the NOx species retained in the gas phase towards the active catalytic sites.

In Fig. 5 is represented a cross-sectional view of an alternative embodiment of the monolith support.

The monolith assembly 105 comprises a gas permeable channels 109 and a plurality of subchannels 107. The subchannels 107 can be used to inject the ammonia stream 15 into the main channels carrying the tail gas 13. In figure it can be appreciated that the ammonia stream is injected perpendicularly to the flow direction of the pre-heated tail gas 13.

Advantageously in view of the current injection system, no mixing unit outside the catalytic reduction reactor is required.

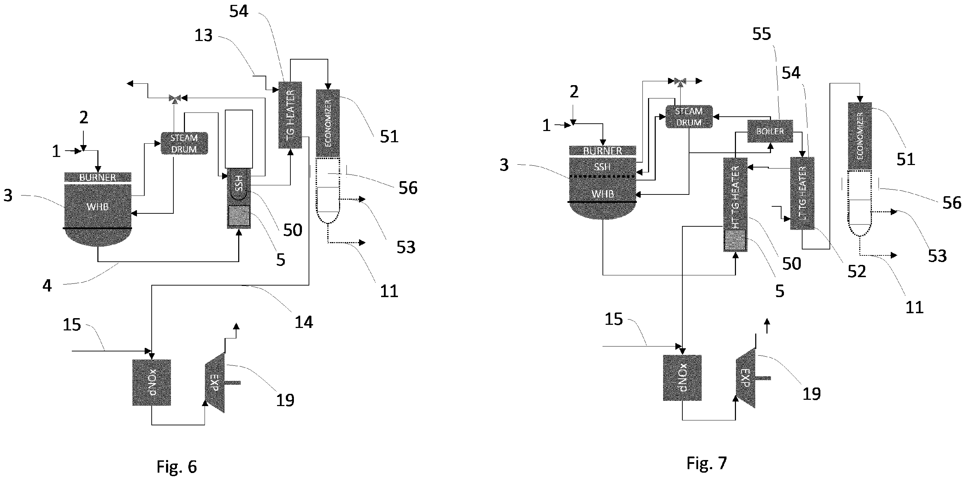

Fig. 6 discloses a preferred layout including the following:
ammonia burner (BURNER) wherein ammonia is oxidized;
waste heat boiler (WHB) wherein the effluent of the ammonia burner is cooled, the waste heat boiler and the ammonia burner being accommodated in the same apparatus;
a steam drum (STEAM DRUM) which receives the steam produced in the WHB;
a steam superheater (SSH) wherein steam separated from the steam drum is superheated with the hot effluent 4;
a tail gas heater (TG HEATER) wherein further heat is recovered from the hot gas and used to preheat the tail gas before it is admitted to the de-NOx stage;
an economizer (ECONOMIZER) wherein further heat is recovered from the hot gas and water is heated close to evaporation temperature;
a de-NOx stage (dNOx);
a tail gas expander (EXP).

Fig. 6 illustrates that the catalytic reduction step N2O is carried out after the ammonia oxidation step and the N2O catalytic reduction step is performed in a reactor 50 provide with the Steam Superheater SSH. In more details, the N2O catalytic reduction step is carried out in a monolith catalytic bed 5 located at the entrance of the shell side of the steam superheater.

The ammonia oxidation step 3 is carried out in a burner that includes a waste heat boiler WHB located below the catalytic bed.

The steam superheater SSH is configured to heat a saturated steam under pressurized conditions exploiting the heat generated by the exothermic reduction of N2O.

Additional heat recovery is carried out in the heat exchanger 54 where heat is indirectly transferred to the tail gas 13 exiting the absorption tower (not showed) and in the economizer 51 wherein a water stream is heated below its boiling temperature.

The cooled gas exiting from the economizer is sent to a condensation and separation step 56. The gas is further cooled below the dew point, resulting in a liquid stream 11 containing low concentration acid convoyed to the absorption tower (not showed), and a residual gas stream 53 sent to NOx compressor (not showed).

It can be seen that heat is recovered from the hot gas 4 via the steam superheater, the tail gas heater and the economizer. In Fig. 6, a deN2O stage 5 is integrated with the steam superheater SSH.

Fig. 7 illustrates an embodiment wherein the ammonia burner the waste heat boiler and the steam superheater are integrated in the same apparatus. Furthermore, the The preheating of the tail gas is performed in a low temperature preheater (LT TG HEATER) and in a high temperature preheater (HT TG HEATER). The deN2O stage 5 is integrated in a reactor 50 that includes the high-temperature tail gas preheater and receives the hot gas from the waste heat boiler WHB.

The hot gas leaving said reactor 50 is then passed to a boiler and to the low-temperature tail gag preheater 52.

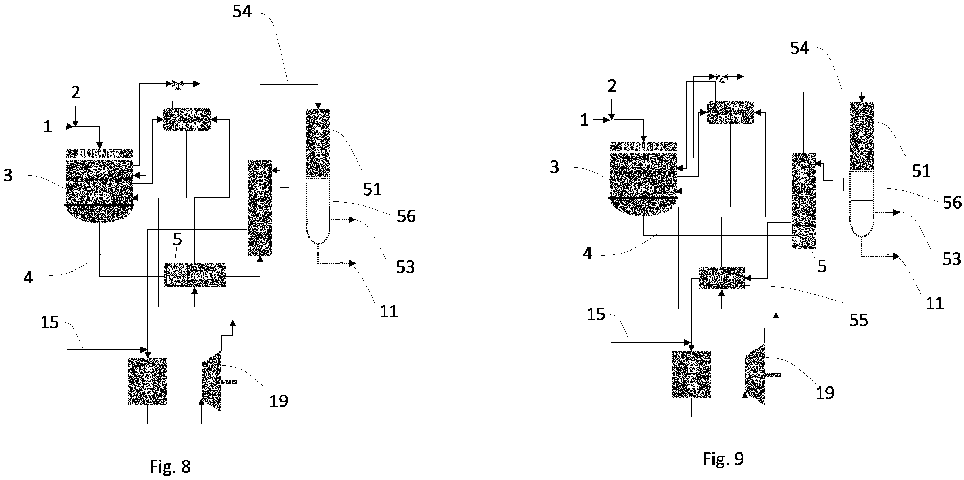

Fig. 8 illustrates another embodiment wherein the deN2O stage 5 is integrated with a boiler.

Fig. 9 illustrates another embodiment wherein the deN2O stage 5 is integrated with a high-temperature tail gas preheater.

## Claims

1. Process for preparing nitric acid (100) comprising the steps of:
a) subjecting ammonia (1) in presence of oxygen (2) or air to a catalytic oxidation step (3) to yield a combusted gas (4);
b) subjecting the combusted gas (4) to a catalytic decomposition step (5) to yield a N₂O depleted gas stream (6);
c) subjecting the N₂O depleted gas stream (6) to a cooling step (9) to yield a cooled stream (11);
d) subjecting said cooled stream (11) to an absorption step (23) in presence of water (50) to yield a nitric acid (12) and a tail gas (13) retaining NOx;
wherein:
• the catalytic decomposition step (5) is carried out at a temperature comprised between 450 °C and 700 °C;
• said catalytic decomposition step is performed on a catalytic assembly comprising a support provided with gas permeable channels wherein a catalyst comprising one or more iron zeolites is deposited or coextruded on said support.

2. Process for preparing nitric acid according to claim 1, wherein the N2O abatement efficiency of said catalytic decomposition step (5) is greater than 98%, preferably greater than 99% and more preferably the N2O content in the N2O depleted gas stream (6) is lower than 15 ppm.

3. Process according to claim 1 or 2, wherein said support comprises at least one of the following:
• a monolith block;
• a periodic ordered cellular structure;
• an open cell metallic foam.

4. Process according to any one of the previous claims, further comprising the steps of:
e) subjecting said tail gas (13) to a heating step (22) followed by a catalytic reduction step (17) to remove NOx in presence of a reducing agent (15), which is preferably ammonia, to yield a purified gas stream (18).

5. Process according to claim 4, wherein said catalytic reduction step (17) to remove NOx is performed on a catalytic assembly comprising a monolith support provided with gas permeable channels wherein a catalyst comprising one or more zeolites is deposited, coated or coextruded on said monolith support.

6. Process according to claim 4 or 5, wherein said catalytic reduction step to remove NOx is performed on a zeolite catalyst, preferably a ferrierite catalyst, more preferably a non-iron ferrierite catalyst.

7. Process according to claim 5 or 6, wherein said catalytic reduction step (17) to remove NOx also removes N2O.

8. Process according to any of claims 5 to 7, wherein the monolith support of the catalytic assembly to remove NOx is provided with gas permeable sub-channels configured to inject said reducing agent (15).

9. Process according to any one of the claims 4 to 8, wherein the step (c) and the step (e) are carried out simultaneously so to achieve thermal integration between the two steps, wherein the heat developed by the step of catalytic decomposition of N2O (5) is transferred to the step of catalytic reduction of NOx (17).

10. Process according to any one of claims 4 to 8, wherein the heating step (22) is performed to heat said tail gas (13) to a temperature comprised between 300 °C and 650 °C.

11. Process according to any one of previous claims, wherein the space velocity in the N2O catalytic decomposition step is higher than 5000 h-1, preferably comprised between 15000 h-1 and 40000 h-1.

12. Process according to any previous claims, wherein the N2O depleted gas (6) is used to pre-heat the tail gas (13) before being fed to said cooling step (9).

13. Plant for the synthesis of nitric acid comprising:
a) an ammonia burner (3) for the catalytic oxidation of NH3 by means of oxygen (2) to yield a combusted gas (4);
b) a catalytic reactive bed (5) for the N2O decomposition arranged downstream the ammonia burner (3) configured to yield a N2O depleted gas stream (6) wherein the N2O catalytic decomposition step is performed on a catalytic assembly comprising a support provided with gas permeable channels wherein a catalyst comprising one or more iron zeolites is deposited, coated, or coextruded on said support.
c) a cooling section (9) arranged downstream of said catalytic reactive bed (5);
d) an absorption tower (23) arranged downstream the cooling section (9) for reacting NOx with an absorption medium (50) to yield nitric acid (12) and a tail gas (23);
e) a gas flow line connecting the ammonia burner (3) to said catalytic reactive bed (5);
f) a gas flow line connecting said catalytic reactive bed (5) to the cooling section (9).

14. Plant according to claim 13, further comprising:
• a catalytic reactive bed (17) for the catalytic reduction of NOx arranged downstream of the absorption tower (23);
• a line for feeding a reducing agent (15) to said catalytic reactive bed (17) for the reduction of NOx.

15. Plant according to claim 14, further comprising:
• a heat exchanger section (22) interposed between said catalytic reactive bed (5) for the N2O decomposition and said cooling section (9), wherein the heat exchanger section (22) is configured to indirectly heat transfer from the N2O depleted gas stream (6) to the tail gas (13).

16. Plant according to claim 14 or 15, wherein the catalytic reactive bed (5) for the N2O decomposition and catalytic reactive bed (17) for the reduction of NOx are comprised in a single section (50).

17. A catalytic assembly (105) comprising:
• a catalyst suitable for the decomposition of N2O;
• a support (105) for the catalyst;
wherein:
• the support (105) is a monolith unit or a periodic ordered cellular structure or an open cell metallic foam;
• the support comprises a plurality of gas permeable channels (109) wherein the catalyst is deposited on the surface of said gas-permeable channels (109) optionally in presence of a binder.

18. A catalyst assembly according to claim 17, wherein said gas-permeable channels (109) are convergent channels **characterised by** a progressive reduction in cross-sectional area.

19. A catalytic assembly according to claim 17 or 18, wherein the support (109) further includes a plurality of subchannels (107) configured to inject a stream (15) into said gas-permeable channels.

20. A catalytic assembly according to any one of the previous claims 17 to 19, wherein the monolith block has a cell per square inch comprised between 100 and 400, a thickness of the rims lower than 1 mm and a void fraction comprised between 0.5 and 0.8.
